(19) Europäisches Patentamt
European Patent Office
Office européen des brevets

(11) **EP 3 099 079 A1**

(12) **EUROPEAN PATENT APPLICATION**

(43) Date of publication:
**30.11.2016 Bulletin 2016/48**

(51) Int Cl.:
***H04N 21/414*** (2011.01)    ***H04N 21/422*** (2011.01)
***H04N 21/431*** (2011.01)    ***H04N 21/81*** (2011.01)

(21) Application number: **15305827.6**

(22) Date of filing: **29.05.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
• **Monsifrot, Antoine**
  **35576 CESSON SEVIGNE (FR)**
• **Baudry, Severine**
  **35576 CESSON SEVIGNE (FR)**
• **Doerr, Gwenael**
  **35576 CESSON SEVIGNE (FR)**

(74) Representative: **Huchet, Anne**
  **TECHNICOLOR**
  **1-5, rue Jeanne d'Arc**
  **92130 Issy-les-Moulineaux (FR)**

(54) **METHOD FOR DISPLAYING, IN A VEHICLE, A CONTENT FROM 4D LIGHT FIELD DATA ASSOCIATED WITH A SCENE**

(57)    In one embodiment, it is proposed a method for displaying, in a vehicle, a content from 4D light field data associated with a scene. Such method is executed by an electronic device, and is remarkable in that it comprises changing point of view of said content and/or a focus plane associated with said content, according to data related to a movement of said vehicle.

FIG.7

Printed by Jouve, 75001 PARIS (FR)

**Description**

Technical Field

The disclosure relates to a technique for reducing motion sickness.

Background

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

In a moving vehicle such as a boat or a car, people typically experience a rocking motion due to the waves or bumps on the road. This is felt by the organs of proprioception in the inner ear which are responsible for establishing the balance of the human body. In a normal context, when the person is walking or climbing, this sense of proprioception is corroborated by the visual information that is captured by the person's eyes. When both these senses are in agreement, the person does not experience any discord. However, when they are not in agreement, for example, due to the eyes of the person being fixated on an interior object in the boat that rocks along with the vehicle, the person experiences severe nausea. Taking a cue from its evolution, the brain judges that this disagreement in the senses might be due to the consumption of poison, and thereby activates hormones and enzymes which cause a vomiting sensation. Various bodily systems are affected, including the digestion of food.

Since sea-sickness is a very severe problem, various types of medical remedies exist which typically attempt to treat the symptoms such as vomiting or agitation. However, these medications have side-effects making the person drowsy or disoriented. They do not solve the core of the problem which is the misalignment between the different types of sensory inputs. Alternatively, a few technological solutions exist that control the sensory input to the body. They also do not have any physiological side-effects.

We distinguish two main causes for why the body feels disoriented in a rocking boat. The first one concerns the dramatic changes in both the visual stimulus and the inner sense of balance, the brain being unable to cope with the magnitude of the stimulus. The second one relates to the misalignment between the visual stimulus and the inner sense of balance. The first cause is more prominent during sudden rocky motions, e.g., while moving in a roller coaster. The second cause is more prominent during small and steady motions. If the problem is of the first type, a reduction in visual stimulus will help. For example, the visual stimulus can be blocked completely using shutter lenses (as explained in document US 6932090 B1) but which periodically open at a regular frequency in order to prevent retinal slip. Alternatively, the user might wear a set of goggles that create an artificial visual labyrinth which is made to align with the sense of balance (as explained in document CA 2197588). However, this solution relies on completely shutting down external stimulus, which is not advisable in many situations. For example, a pilot flying an aircraft still needs to see his external surroundings. In this scenario, only a small portion of the visual labyrinth can be used for restoring the sense of balance, typically in the form of a cross-hair in the visual field on which the user needs to focus. Most often, the cause for body-disorientation is of the second type, where the visual stimulus is smooth but in misalignment with the inner sense of balance. An example for this case is when a person is present inside a boat that is sailing on calm seas over steady periodic waves. Here, if one's eyes are fixated on an interior object which has no relative motion with respect to one's own body, then one feels nausea. Indeed, one feels better if one fixates the eyes on an external object, typically the horizon, which remains stable in absolute coordinates but moves relative to the eyes in exact synchronization to the motion of the boat.

Moreover, in order to overcome or at least reduce the motion sickness, other techniques have been proposed in the state-of-the-art.

For example, a technique described in document US5966680 proposes to use a head mounted display (HMD) for exploiting reality augmentation capabilities of the display apparatus to incorporate visual cues, e.g. some lines, in the field of vision of the user to relieve motion sickness. To achieve this effect, the device in charge of generating the visual cues is coupled to means for capturing orientation and acceleration. However, this solution is not acceptable in the case of video. It is usable in the case of navigation tool for example but a user will never accept the insertion of lines in a movie.

Another technique is described in document US6866225, where the objective is to provide motion-coherent visual feedback in an environment with limited visual reference, e.g. a plane with small windows. The main idea is therefore to display a live feed of what the driver/pilot is currently seeing. There are then a number of variants being discussed to personalize the display within the vehicle e.g. with respect to the rotation axis of the vehicle. However, this is not a solution to watch a movie. The user cannot watch in the same time two screens, one that shows the movie we want to watch and one that shows what the pilot is currently seeing.

Another technique described in document US 2004/0034212 relates to the display of a window representative of an evocative image by a screen, where the position of the displayed window moves according to the initial (see Figures 4 or 6D of document US 2004/0034212). However, the proposed technique in document US 2004/0034212 doesn't work in the case that strong/high acceleration and deceleration (on straight direction) are done due to the fact that the displayed window is not going to move (or with a slight movement). Therefore, there is a need to obtain a technique that can cover all type of movement of vehicles.

The present technique is an alternative to these solutions

Summary of the disclosure

References in the specification to "one embodiment", "an embodiment", "an example embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The present disclosure is directed to a method for displaying, in a vehicle, a content from 4D light field data associated with a scene. The method is executed by an electronic device, and is remarkable in that it comprises changing point of view of said content and/or a focus plane associated with said content, according to data related to a movement of said vehicle.

Hence, such method has the technical effect of reducing motion sickness in a moving vehicle.

It should be noted that, in one embodiment, the concept of changing point of view correspond to changing perspective shift/parallax selection as explained in for example in the following link: http://lightfield-forum.com/lightfield-features/.

In a preferred embodiment, the method for displaying is remarkable in that said vehicle has between two to nine degrees of freedom, and said movement is linked to at least one motion according to one of said two to nine degree of freedom.

In a preferred embodiment, the method is remarkable in that, in the case that said content is generated from at least one focal stack derived from said 4D light field data, said at least one focal stack being associated with a point of view, said focal stack comprises a sequence of images each focused on a different plane, in which a difference between different planes is defined as a function of a point of visual attention in said scene.

In a preferred embodiment, the method is remarkable in that said difference is further defined as a function of said movement of said vehicle.

In a preferred embodiment, the method is remarkable in that said content is a 4D light field data.

In a preferred embodiment, the method is remarkable in that said content is a 2D image or a 2D video

In a preferred embodiment, the method is remarkable in that said content is a stereoscopic content.

In a preferred embodiment, the method is remarkable in that said data related to a movement are obtained from a sensor that comprises a gyroscope.

In a preferred embodiment, the method is remarkable in that said data related to a movement are obtained from a data generator that is based on modeling equations that simulate vehicle's movements.

In a preferred embodiment, the method is remarkable in that a blurring is applied on out-of-focus elements comprised in said content.

Hence, by enhancing the effect of out-of-focus, the eye of a user are focused on the sharp elements in the content. Therefore, it helps to reduce the motion sickness of the user.

In one embodiment, such blurring comprises the adding of a Gaussian blur to out-of-focus elements in said content.

In one embodiment of the present disclosure we solve the second type of problem previously mentioned, by simulating the motion of the horizon on an a display device based on the processing of 4D-light-field data.

According to an exemplary implementation, the different steps of the method are implemented by a computer software program or programs, this software program comprising software instructions designed to be executed by a data processor of a relay module according to the disclosure and being designed to control the execution of the different steps of this method.

Consequently, an aspect of the disclosure also concerns a program liable to be executed by a computer or by a data processor, this program comprising instructions to command the execution of the steps of a method as mentioned here above.

This program can use any programming language whatsoever and be in the form of a source code, object code or code that is intermediate between source code and object code, such as in a partially compiled form or in any other desirable form.

The disclosure also concerns an information medium readable by a data processor and comprising instructions of a program as mentioned here above.

The information medium can be any entity or device capable of storing the program. For example, the medium can comprise a storage means such as a ROM (which stands for *"Read Only Memory')*, for example a CD-ROM (which stands for *"Compact Disc - Read Only Memory"*) or a microelectronic circuit ROM or again a magnetic recording means, for example a floppy disk or a hard disk drive.

Furthermore, the information medium may be a transmissible carrier such as an electrical or optical signal that can be conveyed through an electrical or optical cable, by radio or by other means. The program can be especially downloaded into an Internet-type network.

Alternately, the information medium can be an integrated circuit into which the program is incorporated, the circuit being adapted to executing or being used in the execution of the method in question.

According to one embodiment, an embodiment of the disclosure is implemented by means of software and/or hardware components. From this viewpoint, the term "module" can correspond in this document both to a software component and to a hardware component or to a set of hardware and software components.

A software component corresponds to one or more computer programs, one or more sub-programs of a program, or more generally to any element of a program or a software program capable of implementing a function or a set of functions according to what is described here below for the module concerned. One such software component is executed by a data processor of a physical entity (terminal, server, etc.) and is capable of accessing the hardware resources of this physical entity (memories, recording media, communications buses, input/output electronic boards, user interfaces, etc.).

Similarly, a hardware component corresponds to any element of a hardware unit capable of implementing a function or a set of functions according to what is described here below for the module concerned. It may be a programmable hardware component or a component with an integrated circuit for the execution of software, for example an integrated circuit, a smart card, a memory card, an electronic board for executing firmware etc. In a variant, the hardware component comprises a processor that is an integrated circuit such as a central processing unit, and/or a microprocessor, and/or an Application-specific integrated circuit (ASIC), and/or an Application-specific instruction-set processor (ASIP), and/or a graphics processing unit (GPU), and/or a physics processing unit (PPU), and/or a digital signal processor (DSP), and/or an image processor, and/or a coprocessor, and/or a floating-point unit, and/or a network processor, and/or an audio processor, and/or a multi-core processor. Moreover, the hardware component can also comprise a baseband processor (comprising for example memory units, and a firmware) and/or radio electronic circuits (that can comprise antennas) which receive or transmit radio signals. In one embodiment, the hardware component is compliant with one or more standards such as ISO/IEC 18092 / ECMA-340, ISO/IEC 21481 / ECMA-352, GSMA, StoLPaN, ETSI / SCP (Smart Card Platform), GlobalPlatform (i.e. a secure element). In a variant, the hardware component is a Radio-frequency identification (RFID) tag. In one embodiment, a hardware component comprises circuits that enable Bluetooth communications, and/or Wi-fi communications, and/or Zigbee communications, and/or USB communications and/or Firewire communications and/or NFC (for Near Field) communications.

It should also be noted that a step of obtaining an element/value in the present document can be viewed either as a step of reading such element/value in a memory unit of an electronic device or a step of receiving such element/value from another electronic device via communication means.

In a variant, it is proposed an electronic for displaying, in a vehicle, a content from 4D light field data associated with a scene. The electronic device is remarkable in that it comprises a module configured to changing point of view of said content and/or a focus plane associated with said content, according to data related to a movement of said vehicle.

In a preferred embodiment, the electronic device is remarkable in that said vehicle has between two to nine degrees of freedom, and said movement is linked to at least one motion according to one of said two to nine degree of freedom.

In a preferred embodiment, the electronic device is remarkable in that, in the case that said content is generated from at least one focal stack derived from said 4D light field data, said at least one focal stack being associated with a point of view, said focal stack comprises a sequence of images each focused on a different plane, in which a difference between different planes is defined as a function of a point of visual attention in said scene.

In a preferred embodiment, the electronic device is remarkable in that said data related to a movement are obtained from a data generator that is based on modeling equations that simulate vehicle's movements.

Brief description of the drawings

The above and other aspects of the invention will become more apparent by the following detailed description of exemplary embodiments thereof with reference to the attached drawings in which:

- Figure 1 presents a schematic flowchart of a method for displaying according to one embodiment of the present principle;
- Figure 2 presents some movements whom the effects can be reduced according to one embodiment of the disclosure;
- Figure 3 presents 4D light-field data represented as a set of sub-aperture images, as well as a coordinate referential system for describing movements of a vehicle;
- Figure 4 illustrates the compensation of the rotation Ry of the vehicle, according to one embodiment of the disclosure;
- Figure 5 depicts a focal stack as known in the state of the art;
- Figure 6 illustrates a focal stack, which has been determined with an irregular sampling grid adapted to the scene, according to one embodiment of the disclosure;
- Figure 7 illustrates a method for displaying according to one embodiment of the disclosure;
- Figure 8 illustrates a method for displaying according to another embodiment of the disclosure;

- Figure 9 presents an example of a device that can be used to perform one or several steps of methods disclosed in the present document.

Detailed description

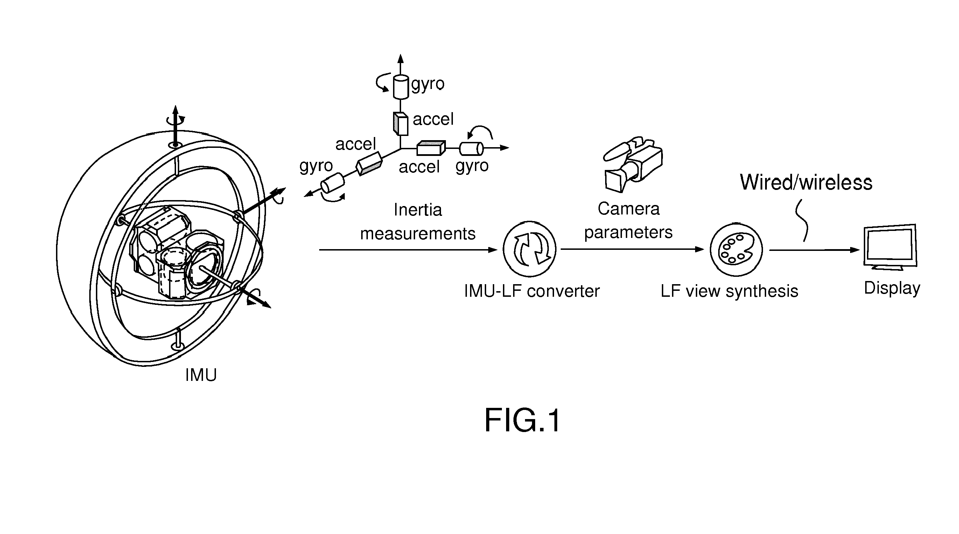

The acquisition and rendering (or display) of 4D light-field data, which can be viewed as a sampling of a 4D light field (i.e. the recording of light rays as explained in Figure 1 of the article:" Understanding camera trade-offs through a Bayesian analysis of light field projections" by Anat Levin et al., published in the conference proceedings of ECCV 2008) is an hectic research subject.

Indeed, compared to classical 2D images obtained from a camera, 4D light-field data enable a user to have access to more post processing features that enhance the rendering of images and/or the interactivity with the user. For example, with 4D light-field data, it is possible to perform with ease refocusing of images a posteriori (i.e. refocusing with freely selected distances of focalization meaning that the position of a focal plane can be specified/selected a posteriori), as well as changing slightly the point of view in the scene of an image. The acquisition of 4D light-field data can be done by different techniques (for example via the use of plenoptic camera, as depicted in document WO 2013/180192 or in document GB 2488905, or via the use a camera array as depicted in document WO 2014/149403).

In the state of the art, there are several ways to represent (or define) 4D light-field data. Indeed, in the Chapter 3.3 of the Phd dissertation thesis entitled "Digital Light Field Photogrgphy" by Ren Ng, published in July 2006, three different ways to represent 4D light-field data are described. Firstly, 4D light-field data can be represented, when recorded by a plenoptic camera by a collection of micro-lens images. 4D light-field data in this representation are named raw images (or raw 4D light-field data). Secondly, 4D light-field data can be represented, by a set of sub-aperture images. A sub-aperture image corresponds to a captured image of a scene from a point of view, the point of view being slightly different between two sub-aperture images. These sub-aperture images give information about the parallax and depth of the imaged scene. Thirdly, 4D light-field data can be represented by a set of epipolar images (see for example the article entitled : "Generating EPI Representation of a 4D Light Fields with a Single Lens Focused Plenoptic Camera", by S. Wanner et al., published in the conference proceedings of ISVC 2011).

Usually, 4D light-field data can be used for displaying at least one 2D image in which refocusing a posteriori can be done (i.e. the display device is a conventional display device). But, it is also possible to display these 4D light-field data via a light field display device as the one depicted in document US 8933862, or in the document US 8416289 In a variant, the light field display device can be the one depicted in the article entitled "A Compressive Light Field Projection System" by M. Hirsch, G. Wetzstein, R. Raska, published in the conference proceedings of SIGGRAPH 2014. The present technique can be used with either a light field device or a conventional display device.

In a variant, from one of this representation of 4D light-field data, it is possible to generate several focal stacks (i.e. one focal stack being associated with a viewing angle of a scene). Each focal stack is defined as a sequence of images each focused on a different plane. Then a display device (either a 2D display device or a light field display device) can perform a processing on the images in these focal stacks for displaying purpose. In the state of the art, in a focal stack, the space between the different planes is the same (for example, two consecutive images are associated with focal planes spaced from each other from around one meter in the scene space).

Figure 1 presents a schematic flowchart of a method for displaying according to one embodiment of the present principles.

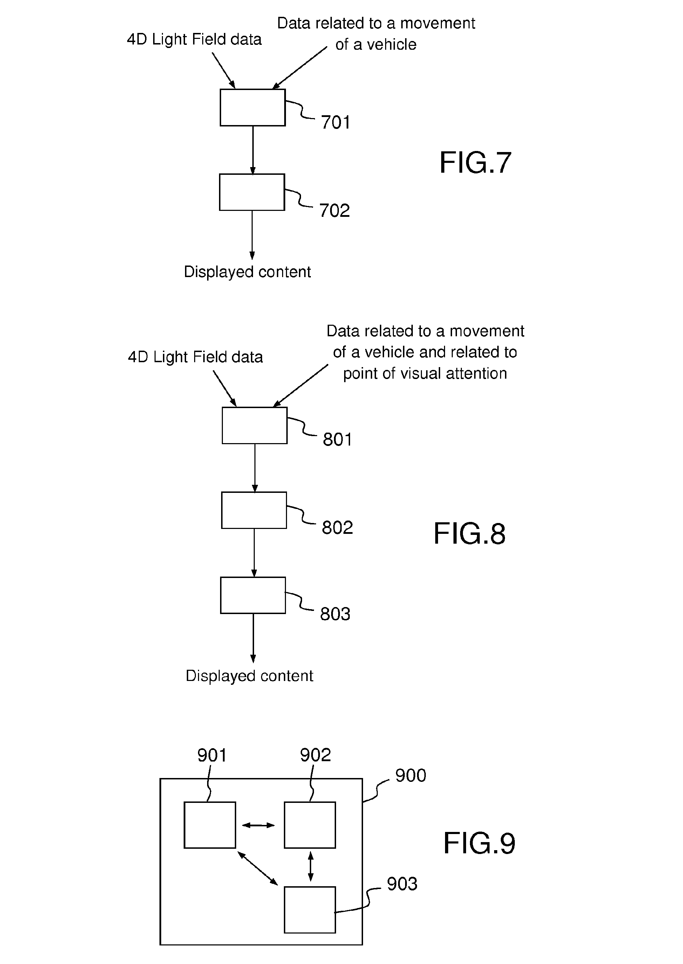

A sensor, named in the following an Inertial Measurement Unit (IMU) is *"an electronic device that measures and reports a vehicle's velocity, orientation, and gravitational forces, using a combination of accelerometers and gyroscopes, sometimes also magnetometers"* (as defined in wikipedia). The IMU provides to an electronic device (as the one depicted in Figure 9) some measurements. Then the electronic device obtains 4D light-field data from which a content (either a 2D content or a light field content) has to be displayed. By taking into account the movements deduced from the measurements, the electronic device changes the content to be displayed. More precisely, in one embodiment, the IMU provides a plurality of measurements at regular time intervals, e.g. acceleration and rotation along the three main axis. These measurements are then fed to controller units that map them to relevant light-field view synthesis parameters. There parameters are then used to generate a synthetic view using the information contained in the light field and eventually presented to the end user. In one embodiment of the disclosure, the sensor comprises a set of gyrometers and position tracking devices that can measure relative changes in 3D position and orientation of the base of the vehicle (for example a boat or a car). In this embodiment, it is assumed that the motion of the person within the vehicle is voluntary and thus can be ignored for the sake of visual alignment.

In one embodiment of the disclosure, the view synthesis capabilities of a light field display device visually mirror the inertia measurements and thereby shift the gaze of the user in order to relieve motion thickness. Indeed, when a user is watching the screen of the light field display device on board of a moving vehicle, the visual content indicates static motion whereas the vestibular system may indicate otherwise. Due to the attention model, the eye of the human is naturally attracted by salient features of the displayed visual content. By adjusting the view displayed on screen, these features will be moved thereby shifting the gaze of the observer. This phenomenon can be exploited to couple the gaze of the observer according to the measurements of the IMU.

In a variant, instead of using a sensor that is an IMU, a set of sensors that is an attitude and heading reference system (AHRS) is used. As explained in Wikipedia, an AHRS corresponds to set of sensors poisoned *"on three axes that provide attitude information for aircraft, including heading, pitch and yaw. They are designed to replace traditional mechanical gyroscopic flight instruments and provide superior reliability and accuracy".*

In another variant, the sensor can comprise features as described in the article entitled: "A Novel Motion Sensor with Nine Degrees of Freedom", by Tao Liu et al., published in the conference proceedings of the 4th International Conference on Biomedical Engineering and Informatics (BMEI), in 2011.

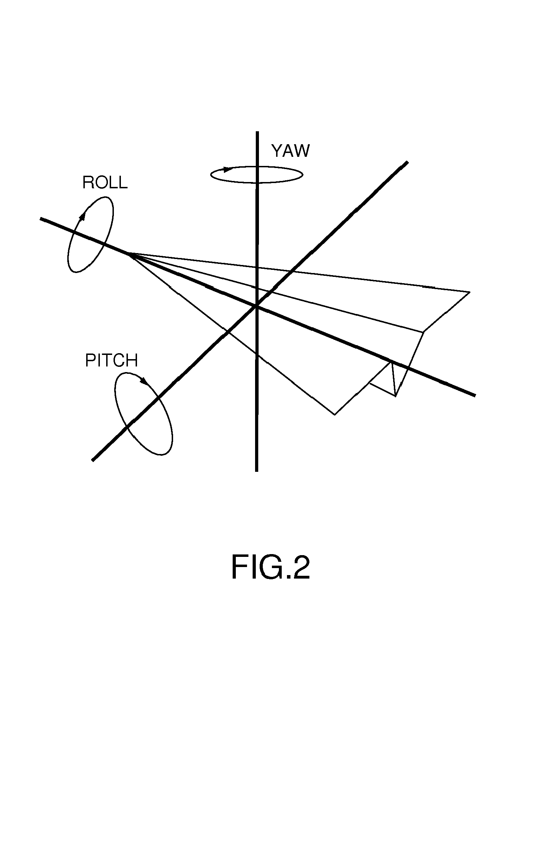

Figure 2 presents some movements whose effects can be reduced according to one embodiment of the disclosure.

In one embodiment, the electronic device simulates a change of position and/or orientation of the camera axis. As a result, view adaptation can be significantly simplified:

- Pitch (rotation along the x-axis) can be compensated by adjusting the tip of the optical axis downward/upward;
- Yaw (rotation along the y-axis) can be compensated by adjusting the tip of the optical axis sideways;
- Roll (rotation along the z-axis) can be compensated by a regular rotation of the 2D view (may require cropping the video but it is an unusual movement in commercial planes, coaches, and cars);
- Acceleration along the x-axis (resp. y-axis) can be compensated by shifting the optical axis along the x-axis (resp. y-axis)
- Acceleration along the z-axis can be compensated by zooming in/out the 2D view (may again require cropping of the video).

The amplitude of the modifications is tightly related to the calibration of the light field acquisition system. This being said, it may not be necessary to fool the gaze of the observer with the same amplitude as the real motion to significantly relieve motion sickness.

In addition, in one embodiment of the disclosure, it is used a relaxation mechanism that naturally brings the view synthesis parameters to their default values when the IMU measurements remain stable over time. Motion perception through the vestibular system is indeed more sensitive to discontinuities in the IMU measurements rather than their raw values. For instance, visual accommodation is more critical in the early stage of a free fall. This relaxation mechanism also permit to virtually reset the view adaptation parameters and thereby allow to cope with subsequent changes. Light field imaging usually provides superior view synthesis capabilities than multiviews videos but still has its own limitations inherited from the calibration process of the acquisition device.

In one embodiment of the disclosure, a mechanism to prevent motion sickness while watching movies on entertainment systems on board of moving vehicles is provided. From a technical perspective, it leverages on the inherent properties of light field imaging to provide synthesized views that occupies the whole display apparatus without scarifying part of the content.

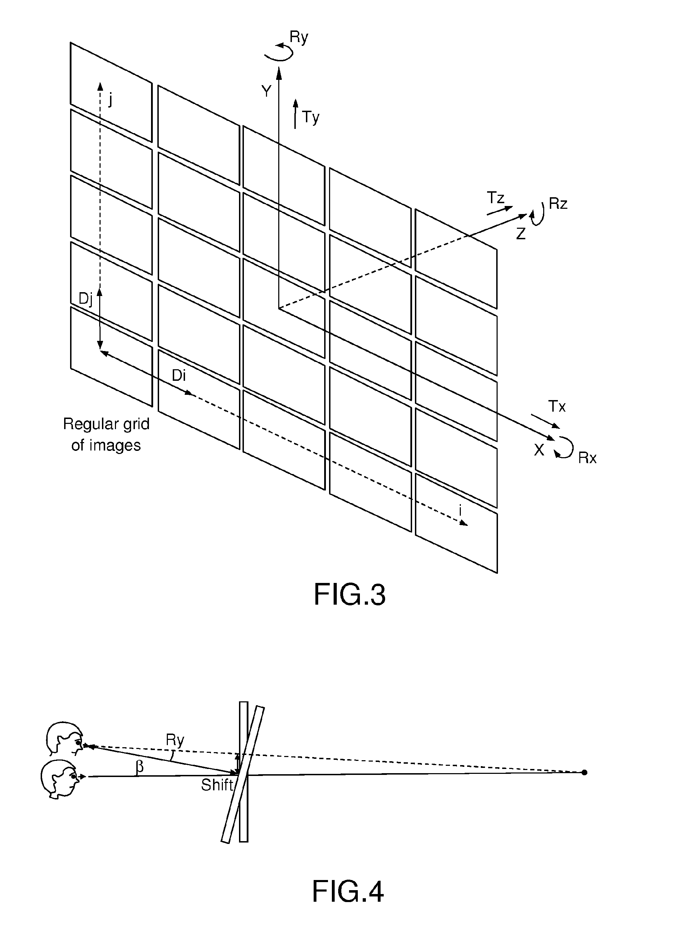

As explained previously, 4D light field data can be represented by a set of sub-aperture images, noted $V = \{V_{i,j}\}$, that can be viewed as a matrix of $N \times M$ image views such that the physical distance between two consecutive views is equal to $D_i \times D_j$ horizontally and vertically (as illustrated in Figure 3).

The following sections describe one possible embodiment for cancelling (or at least reducing) some movements of a vehicle (especially the translations $T_x$, $T_y$, $T_z$ and the rotations/orientations $R_x$, $R_y$, $R_z$ in space).

## A Cancelling the variation of $T_x$, $T_y$, $T_z$

When no motion occurs (no variation in position and rotation), the image displayed on the screen is equal to $V_{N/2, M/2}$: the image in the middle of the regular lightfield $V$. When a variation in $T_x$ or $T_y$ is observed the electronic device computes the indices $(i,j) = \alpha \frac{T_x}{D_i} + \frac{M}{2}, \ \alpha \frac{T_y}{D_j} + \frac{N}{2}$ the image from $V$ to be displayed on screen. If the indices $(i,j)$ are non-integer, interpolation with neighborhood views can be used. The parameter $\alpha$ should be equal to 1.0 but could be chosen smaller in case the baseline of the camera is smaller than the amplitude of the variation of $T_x$ or $T_y$.

## B Cancelling the variation of $R_x$, $R_y$, $R_z$

To take into account the rotation $R_x$, $R_y$, $R_z$ obtained by the gyroscopes, the selected image $V_{i,j}$ is

1. Rotated by $R_z$ taking the center of the image as the rotation center
2. Shifted vertically by $-\beta R_x$
3. Shifted horizontally by $-\beta R_y$ (see Figure 4)

Figure 4 illustrates the compensation of the rotation $R_y$ of the vehicle, according to one embodiment of the disclosure.

The parameter $\beta$ is defined as a function of the average distance of the people watching the screen and can be computed at a calibration phase.

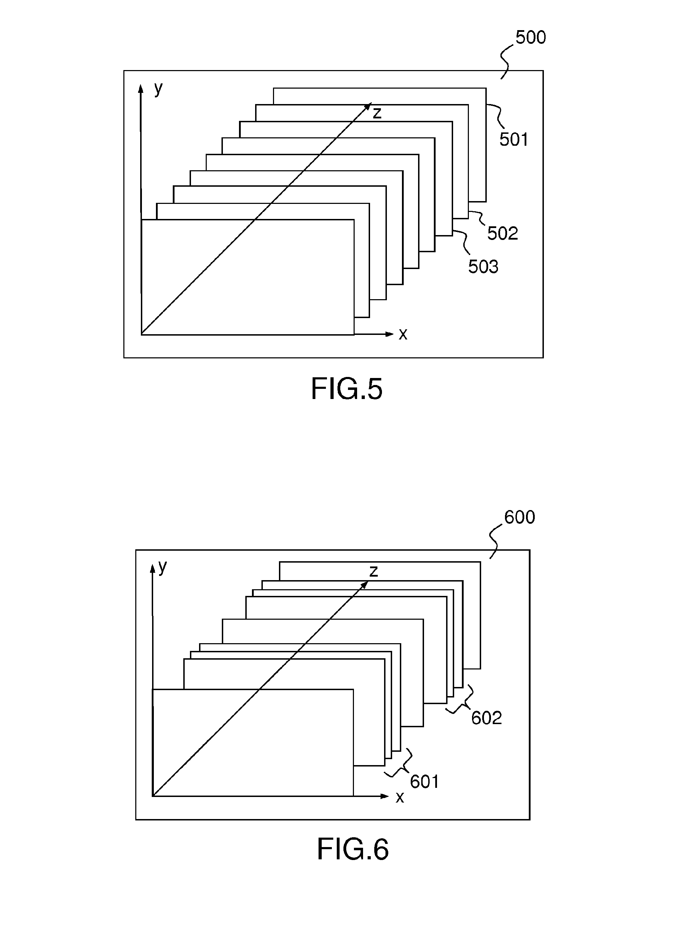

Figure 5 depicts a focal stack, referenced 500 as known in the state of the art. The focal stack 500 is a collection of N images $R_n$ (with $n \in [1,N]$) focused at different planes, which define a cube of images (501, 502, 503...), where N is a user selected number of images. Hence, the distance or distance interval (on the z axis) between two consecutive images in the focal stack 500 corresponds to the distance between two focal planes linked to these two consecutive images. This value is constant, therefore the focal stack is obtained by the use of a regular sampling grid.

Figure 6 illustrates a focal stack, which has been determined with an irregular sampling grid adapted to the scene, according to one embodiment of the disclosure.

Indeed, according to point of interest or point of visual attention in a scene (that can be obtained from statistics), the probability that a user looks at a particular object in a scene can be estimated. Therefore, by taking into account the movement of the vehicle and the point of interest or point of visual attention in a scene, it is possible to determine a focal stack that is not based on a regular sampling, but on a sampling that takes into account these elements. For example, the generated focal stack, referenced 600, comprises smaller space interval (for the group of images referenced 601 and 602) that are related to a point of interest or point of visual attention in a scene (that could be linked to an object or a person in the scene for example).

In a variant, in the case that 2D content is displayed in the vehicle, instead of determining the whole focal stack from 4D light field data, only a 2D image (from a focal stack) is determined at a distance that is linked to the movements of a vehicle. More precisely, in the case that oscillations (such as a sequence of acceleration and deceleration occurs), the 2D images extracted and displayed are (within the focal stack) extracted at a distance that takes into account these oscillations.

Figure 7 illustrates a method for displaying according to one embodiment of the disclosure.

More precisely, an electronic device, in a step referenced 701, obtains 4D light field data as well as data related to a movement of a vehicle.

Then, in a step referenced 702, the electronic device extracts and/or adapts the content to be displayed from the 4D light field data and the data related to a movement of a vehicle.

For example, in one embodiment of the disclosure, the acceleration and deceleration movements of the vehicle induce a change of focus planes associated with said content. In a variant, oscillations that can be viewed as a sequence of accelerations and decelerations can be handled by using change of focus planes in the displayed content (either a 2D content or a light field content).

Then, a display device provides to a user a displayed content.

Figure 8 illustrates a method for displaying according to another embodiment of the disclosure.

More precisely, an electronic device, in a step referenced 801, obtains 4D light field data as well as data related to a movement of a vehicle and data related to point of interest (or point of visual attention in the scene associated with 4D light field data).

Then, in a step referenced 802, the electronic device generates a set of focal stacks with a space between images that is linked to data related to a movement of a vehicle and data related to point of interest. Therefore, some oscillations that can be viewed as a sequence of accelerations and decelerations can be handled more precisely.

Then, in a step referenced 803, the electronic device generates a content to be displayed based on the focal stacks obtained in step 802.

Then, a display device provides a user with a displayed content.

In one embodiment of the disclosure, in the case that the movements can be estimated via a model, the data related to a movement of a vehicle are generated by this model. Such case occurs when movements of a vehicle are likely predictive.. For instance, rotation movements (i.e. pitch, yaw, and roll) in a plane or boat are often periodic movements with frequency $f_p$, i.e. the angle $\theta$ of the pitch (or yaw or roll) will vary along the time as :

$$\theta(t) = \theta_{max}\sin(f_p t)$$

The IMU measures the change $\theta(t)$ of the pitch (or yaw or roll) along time, and $\theta(t)$ will also (in case of a periodic movement) be periodic with same frequency $f_p$. Thus, the frequency $f_p$ can be estimated using state of the art signal processing techniques. For instance, by measuring $\theta'(t_i)$ for regularly spaced time instants $t_i$ (i.e. $t_i = k\tau$ with k integer and $\tau$ being the sampling duration, e.g. $\tau$=0.1 seconds) on a given time window (e.g. 10 seconds), one can compute the Discrete Fourier Transform $\Theta(f)$ of $\theta(t_i)$ and find the peak value of $\Theta(f)$. This peak value occurs at $f = f_p$. The peak amplitude will also give the value of $\theta_{max}$. Then, knowing that the ship's pitch follows the above equation, the movements of the ship can be predicted. For any time t, one can compute the pitch angle $\theta(t)$ and adjust the display of the video accordingly.

Figure 9 presents an example of a device that can be used to perform one or several steps of methods disclosed in the present document.

Such device referenced 900 comprise a computing unit (for example a CPU, for *"Central Processing Unit"*), referenced 901, and one or more memory units (for example a RAM (for *"Random Access Memory"*) block in which intermediate results can be stored temporarily during the execution of instructions a computer program, or a ROM block in which, among other things, computer programs are stored, or an EEPROM (*"Electrically-Erasable Programmable Read-Only Memory"*) block, or a flash block) referenced 902. Computer programs are made of instructions that can be executed by the computing unit. Such device 900 can also comprise a dedicated unit, referenced 903, constituting an input-output interface to allow the device 900 to communicate with other devices. In particular, this dedicated unit 903 can be connected with an antenna (in order to perform communication without contacts), or with serial ports (to carry communications "contact"). It should be noted that the arrows in Figure 9 signify that the linked unit can exchange data through buses for example together.

In an alternative embodiment, some or all of the steps of the method previously described, can be implemented in hardware in a programmable FPGA ("*Field Programmable Gate Array*") component or ASIC ("*Application-Specific Integrated Circuit*") component.

In an alternative embodiment, some or all of the steps of the method previously described, can be executed on an electronic device comprising memory units and processing units as the one disclosed in the Figure 9.

## Claims

1. A method for displaying, in a vehicle, a content from 4D light field data associated with a scene, the method being executed by an electronic device, and being **characterized in that** it comprises changing point of view of said content and/or a focus plane associated with said content, according to data related to a movement of said vehicle.

2. The method for displaying according to claim 1, wherein said vehicle has between two to nine degrees of freedom, and said movement is linked to at least one motion according to one of said two to nine degree of freedom.

3. The method for displaying according to any claims 1 to 2, wherein, in the case that said content is generated from at least one focal stack derived from said 4D light field data, said at least one focal stack being associated with a point of view, said focal stack comprises a sequence of images each focused on a different plane, in which a difference between different planes is defined as a function of a point of visual attention in said scene.

4. The method for displaying according to claim 3, wherein said difference is further defined as a function of said movement of said vehicle.

5. The method for displaying according to any claims 1 to 4, wherein said content is a 4D light field data.

6. The method for displaying according to any claims 1 to 4, wherein said content is a 2D image or a 2D video.

7. The method for displaying according to any claims 1 to 4, wherein said content is a stereoscopic content.

8. The method for displaying according to any claims 1 to 7, wherein said data related to a movement are obtained from a sensor that comprises a gyroscope.

9. The method for displaying according to any claims 1 to 8, wherein said data related to a movement are obtained from a data generator that is based on modeling equations that simulate vehicle's movements.

10. The method for displaying according to any claims 1 to 9, wherein a blurring is applied on out-of-focus elements comprised in said content.

11. A computer-readable and non-transient storage medium storing a computer program comprising a set of computer-executable instructions to implement a method for displaying when the instructions are executed by a computer, wherein the instructions comprise instructions, which when executed, configure the computer to perform the method of claims 1 to 10.

12. An electronic for displaying, in a vehicle, a content from 4D light field data associated with a scene, the electronic device being **characterized in that** it comprises a module configured to changing point of view of said content and/or a focus plane associated with said content, according to data related to a movement of said vehicle.

13. The electronic device for displaying according to claim 12, wherein said vehicle has between two to nine degrees of freedom, and said movement is linked to at least one motion according to one of said two to nine degree of freedom.

14. The electronic device for displaying according to any claims 12 to 13, wherein, in the case that said content is generated from at least one focal stack derived from said 4D light field data, said at least one focal stack being associated with a point of view, said focal stack comprises a sequence of images each focused on a different plane, in which a difference between different planes is defined as a function of a point of visual attention in said scene.

15. The electronic device for displaying according to any claims 12 to 14, wherein said data related to a movement are obtained from a data generator circuit that is based on modeling equations that simulate vehicle's movements.

IMU

gyro accel accel gyro accel gyro

Inertia measurements

IMU-LF converter

Camera parameters

LF view synthesis

Wired/wireless

Display

FIG.1

FIG.2

FIG.3

FIG.4

FIG.5

FIG.6

FIG.7

FIG.8

FIG.9

Europäisches
Patentamt

European
Patent Office

Office européen
des brevets

## EUROPEAN SEARCH REPORT

Application Number

EP 15 30 5827

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2014/176296 A1 (MORGAN EDWARD JAMES [US]) 26 June 2014 (2014-06-26) * paragraphs [0011], [0013], [0016], [0117] * * figures 1-22 * | 1-15 | INV. H04N21/414 H04N21/422 H04N21/431 H04N21/81 |
| Y | US 2014/098191 A1 (RIME LAURENT [CH] ET AL) 10 April 2014 (2014-04-10) * paragraphs [0047], [0048], [0074], [0142] * * figures 1-7 * | 1-15 | |
| A | TAO LIU ET AL: "A novel motion sensor with nine degrees of freedom", BIOMEDICAL ENGINEERING AND INFORMATICS (BMEI), 2011 4TH INTERNATIONAL CONFERENCE ON, IEEE, 15 October 2011 (2011-10-15), pages 1027-1030, XP032071635, DOI: 10.1109/BMEI.2011.6098481 ISBN: 978-1-4244-9351-7 * paragraph [II.A] * * abstract * | 1-15 | |
| A | WO 2011/024269 A1 (PIONEER CORP [JP]; KODA TAKESHI [JP]; SUZUKI TAKASHI [JP]; YOSHIDA TAD) 3 March 2011 (2011-03-03) * abstract * | 1-15 | TECHNICAL FIELDS SEARCHED (IPC) H04N |
| A | US 2009/002142 A1 (MORIMOTO AKIHIRO [JP] ET AL) 1 January 2009 (2009-01-01) * paragraph [0008] * | 1-15 | |
| A | US 2007/282488 A1 (KATO KAZUHITO [JP] ET AL) 6 December 2007 (2007-12-06) * paragraph [0028] - paragraph [0032] * | 1-15 | |

-/--

The present search report has been drawn up for all claims

| Place of search | Date of completion of the search | Examiner |
|---|---|---|
| The Hague | 17 November 2015 | Votini, Stefano |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

# EUROPEAN SEARCH REPORT

Application Number

EP 15 30 5827

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2007/034212 A1 (BRENDLEY KEITH W [US] ET AL) 15 February 2007 (2007-02-15) * paragraph [0065] - paragraph [0089] * ----- | 1-15 | |
| A | EP 1 304 866 A2 (EASTMAN KODAK CO [US]) 23 April 2003 (2003-04-23) * paragraphs [0009], [0012], [0020] * ----- | 1-15 | |
| A | US 2008/199049 A1 (DALY SCOTT J [US]) 21 August 2008 (2008-08-21) * paragraph [0039] - paragraph [0041] * ----- | 1-15 | |
| A | EP 2 852 149 A1 (ALCATEL LUCENT [FR]) 25 March 2015 (2015-03-25) * paragraph [0001] - paragraph [0008] * * figures 1-6 * ----- | 1-15 | |

**TECHNICAL FIELDS SEARCHED (IPC)**

The present search report has been drawn up for all claims

| Place of search | Date of completion of the search | Examiner |
|---|---|---|
| The Hague | 17 November 2015 | Votini, Stefano |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 15 30 5827

This annex lists the patent family members relating to the patent documents cited in the above-mentioned European search report.
The members are as contained in the European Patent Office EDP file on
The European Patent Office is in no way liable for these particulars which are merely given for the purpose of information.

17-11-2015

| Patent document cited in search report | | | Publication date | Patent family member(s) | | | Publication date |
|---|---|---|---|---|---|---|---|
| US 2014176296 | A1 | | 26-06-2014 | US | 2014176296 A1 | | 26-06-2014 |
| | | | | WO | 2014100484 A1 | | 26-06-2014 |
| US 2014098191 | A1 | | 10-04-2014 | NONE | | | |
| WO 2011024269 | A1 | | 03-03-2011 | NONE | | | |
| US 2009002142 | A1 | | 01-01-2009 | EP | 1977931 A1 | | 08-10-2008 |
| | | | | US | 2009002142 A1 | | 01-01-2009 |
| | | | | WO | 2007086431 A1 | | 02-08-2007 |
| US 2007282488 | A1 | | 06-12-2007 | CN | 101083762 A | | 05-12-2007 |
| | | | | JP | 2007320399 A | | 13-12-2007 |
| | | | | US | 2007282488 A1 | | 06-12-2007 |
| US 2007034212 | A1 | | 15-02-2007 | AU | 2003286751 A1 | | 18-06-2004 |
| | | | | US | 2004102676 A1 | | 27-05-2004 |
| | | | | US | 2007034212 A1 | | 15-02-2007 |
| | | | | WO | 2004047711 A2 | | 10-06-2004 |
| EP 1304866 | A2 | | 23-04-2003 | EP | 1304866 A2 | | 23-04-2003 |
| | | | | JP | 2003189219 A | | 04-07-2003 |
| | | | | US | 2003073922 A1 | | 17-04-2003 |
| US 2008199049 | A1 | | 21-08-2008 | CN | 101933082 A | | 29-12-2010 |
| | | | | US | 2008199049 A1 | | 21-08-2008 |
| | | | | WO | 2009069832 A1 | | 04-06-2009 |
| EP 2852149 | A1 | | 25-03-2015 | NONE | | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6932090 B1
- CA 2197588
- US 5966680 A
- US 6866225 B
- US 20040034212 A
- WO 2013180192 A
- GB 2488905 A
- WO 2014149403 A
- US 8933862 B
- US 8416289 B

**Non-patent literature cited in the description**

- **ANAT LEVIN et al.** Understanding camera trade-offs through a Bayesian analysis of light field projections. *conference proceedings of ECCV,* 2008
- **REN NG.** *Digital Light Field Photogrgphy,* July 2006
- **S. WANNER et al.** Generating EPI Representation of a 4D Light Fields with a Single Lens Focused Plenoptic Camera. *conference proceedings of ISVC,* 2011
- **M. HIRSCH ; G. WETZSTEIN ; R. RASKA.** A Compressive Light Field Projection System. *conference proceedings of SIGGRAPH,* 2014
- **TAO LIU et al.** A Novel Motion Sensor with Nine Degrees of Freedom. *conference proceedings of the 4th International Conference on Biomedical Engineering and Informatics (BMEI),* 2011